# EUROPÄISCHE PATENTANMELDUNG

(11) **EP 0 635 753 A1**
(43) Veröffentlichungstag der Anmeldung: **25.01.1995**
(21) Anmeldenummer: 93111815.2
(22) Anmeldetag: 23.07.1993
(51) Int. Cl.: G03B 21/58

(54) **Vorrichtung zum Halten flexibler Bildwände, insbesondere Hintergrundwände**

(71) Anmelder: Herrmann, Alfred, D-92690 Pressath (DE)
(72) Erfinder: Herrmann, Alfred, D-92690 Pressath (DE)
(74) Vertreter: Göbel, Matthias, Dipl.-Ing.

(57) **Zusammenfassung**

Bei einer Vorrichtung zum Halten flexibler Bildwände, insbesondere Hintergrundwände für fotografisch oder elektronisch erzeugbare Bilder, bei der die Bildwände mit einem Ende durch einen Stützstab gehalten sind, ist zum einfachen und sicheren Transportieren und Handhaben der Bildwände die Anordnung eines mobilen aufstellbaren kastenförmigen Gehäuses (1) vorgesehen, das eine Anzahl Bildwandwickel (6) neben- und/oder übereinander gemeinsam mit einem Stützstab (11) aufnimmt, die Bildwände (6') einzeln unabhängig von den Bildwandwickeln (6) entgegen der Wirkung einer Rückstellkraft abzuziehen und die Bildwände (6') mit den freien Enden mittel- oder unmittelbar am aufrecht am Aufnahmegehäuse (1) fixierten Stützstab (11) festzulegen erlaubt.

## Beschreibung

Die Erfindung betrifft eine Vorrichtung zum Halten flexibler Bildwände, insbesondere Hintergrundwände für fotografisch oder elektronisch erzeugbare Bilder, bei der die Bildwände mit einem Ende durch einen Stützstab gehalten sind.

Flexible Bildwände als Hintergrundflächen zu Bildaufnahmen oder Bildwiedergaben sind bereits bekannt. Die bekannten Bildwände sind als Wickel transportierbar und zur Benutzung nach Aufrollen des Wickels mit dem oberen Ende an einem Stützstab Zu befestigen. Die oftmals notwendige Anwendung unterschiedlicher Bildwände erfordert umständliche und unsichere Handhabungen sowie schwierige Transportmaßnahmen für die Wickel und den Stützstab durch den Anwender, wodurch desöfteren Beschädigungen an den Bildwänden unvermeidbar sind. Außerdem führen die Transportschwierigkeiten zu Einschränkungen in der Anwendung unterschiedlich ausgebildeter Bildwände.

Es ist Aufgabe der Erfindung Maßnahmen zum einfachen und sicheren Transportieren und Handhaben von flexiblen Bildwänden zu schaffen.

Der Erfindung gemäß ist die Aufgabe gelöst, durch die Anordnung eines mobilen aufstellbaren kastenförmigen Gehäuses, das eine Anzahl Bildwandwickel neben- und/oder übereinander gemeinsam mit einem Stützstab aufnimmt und weiter dadurch, daß die Bildwände einzeln unabhängig von den Bildwandwickeln entgegen der Wirkung einer Rückstellkraft abziehbar sind und die Bildwände mit den freien Enden mittel- oder unmittelbar am aufrecht am Aufnahmegehäuse fixierten Stützstab festlegbar sind. Auf diese Weise ist ein transportables Hintergrundsytem für fotografische oder elektronisch erzeugbare oder wiederzugebende Bilder mit einer beliebigen Anzahl Bildwänden geschaffen, welches durch den Anwender einfach und sicher zu handhaben ist. Als Hintergrundwände können dabei Landkarten, Lehrtafeln, Lichtwurfflächen für Diapositive oder anderweitige Bildflächen Anwendung finden, wobei die Abmessungen der Bildwände beliebig groß gewählt sein können. Außerdem besteht die Möglichkeit, mit einem einzigen raumsparenden Behältnis eine mehr oder weniger große Anzahl Bildwände und einen zugehörigen Stützstab zur Verfügung zu halten.

In Ausgestaltung der Vorrichtung ist vorgesehen, daß das Aufnahmegehäuse durch einen kastenförmigen Unterteil und einen als Deckel dienenden kastenförmigen Oberteil gebildet ist, daß der Unterteil und der Oberteil vermittels Gelenken schwenkbar und verschließbar miteinander verbunden sind und daß der Ober- und/oder Unterteil des Aufnahmegehäuses eine Anzahl Bildwandwickel sowie mindestens einen Stützstab aufnehmen. Zweckmäßig sind Ober- und Unterteil des Aufnahmegehäuses im Bereich von Längsseiten miteinander gelenkig verbunden. Auch ist denkbar die Gelenkstellen im Bereich von Stirnseiten am Ober- und Unterteil des Aufnahmegehäuses anzuordnen.

Zum Zwecke einer leichten Handhabung der Bildwandwickel, z.B. zum Abziehen der Bildwand vom Wickel ist vorgesehen, daß die freien Enden der Bildwandwickel Stützleisten od. dgl. aufweisen und vermittels der Stützleisten am Stützstab festlegbar sind . Die Stützleisten können, z.B. durch U-Profile bzw. Rohrabschnitte gebildet sein, an bzw. in die die Bildwandwickelenden festgelegt sind. Die Stützleisten dienen zusätzlich der faltenfreien Halterung der Bildwände über ihre ganze Breite. Es versteht sich, daß die Stützleisten aus einem metallischen Werkstoff oder einem Kunststoff gefertigt sein können.

Die Halterung der Stützleisten oder des freien Bildbandendes im Stützstab kann vorteilhaft vermittels einer stützstabfesten Klammer erfolgen. Eine solche Klammer kann, z.B. entgegen der Wirkung einer Rückstellfeder zu öffnen sein, so daß durch einfaches Öffnen der Klammer und Einstecken der Stützleiste sowie Freigeben der Klammer eine Halterung der Bildwände am Stützstab kurzzeitig herstellbar ist. Von Vorteil hat sich noch gezeigt, wenn die Stützleisten an mindestens einem stirnseitigen Ende verlängerbar sind. Die Verlängerungen erlauben zusätzliche Bildwandabschnitte anzuhängen.

Fernerhin ist vorgesehen den Stützstab durch miteinander lösbar fest bzw. fest verbundene Stützstababschnitte zu bilden. Die Stützstababschnitte können dabei einander über Teillängen umfassen und z.B. teleskopartig ausziehbar sein. Die Anwendung von in ihrer Länge veränderbaren Stützstäben ermöglicht Stützstäbe aufzurichten, die in ihrer Höhe unterschiedliche Bildwände haltern.

Die Bildwandwickel selbst sind durch um, z.B. in der Art von Springrollos ausgebildeten Walzenkörpern herumgelegte flexible Gewebe oder Folien gebildet und die Walzenkörper mit ihren stirnseitigen Enden in im Aufnahmegehäuse ausgebildeten Lagern drehbar gehalten. Es versteht sich, daß die Lager entweder unmittelbar in den Gehäusewandungen ausgebildet sind oder durch im Aufnahmegehäuse angeordnete Schienen gebildet sind, die hierzu schlitzförmige bzw. kreisförmige Lageröffnungen für die Aufnahme von an den Walzenkörper angeordneten Achsstummeln aufweisen.

Von besonderem Vorteil hat sich erwiesen, wenn die Lager für die Bildwandwickel durch im Aufnahmegehäuse drehbar geführten Lagerscheiben gebildet sind und die Lagerscheiben eine Anzahl Bildwandwickel trommelförmig stützen. Hierdurch ist erreicht, daß auf engstem Raum eine Vielzahl Bildwandwickel im Aufnahmegehäuse gelagert sein können, die einzelnen Bildwandwickel nacheinander in eine Abzugsposition bringbar sind und nach ihrem Abziehen durch den Stützkörper haltbar sind.

Zur leichten Handhabung der Vorrichtung ist noch vorgesehen, daß Aufnahmegehäuse mit einem starren Tragegriff zu versehen. Der Tragegriff kann auch durch Trageschlaufen ersetzt sein. Ferner ist es zweckmäßig das Aufnahmegehäuse auf einer Außenfläche, insbesondere im Bodenbereich mit mindestens einem Rollenpaar zu versehen, wodurch für den Benutzer die Gelegenheit gegeben ist schwergewichtige Vorrichtungen durch einfaches Verfahren auf Stellflächen zu transportieren. Zweckmäßig ist das Rollenpaar feststellbar ausgebildet, um so unbeabsichtigte Ortsveränderungen des Aufnahmegehäuses bei der Anwendung der Vorrichtung zu verhindern. Schließlich ist noch vorgesehen, daß das Aufnahmegehäuse auf einer Aussenfläche, z.B. dem Boden, ein Rollenpaar und mindestens eine Lenkrolle aufweist, wodurch die Vorrichtung in der Art eines allseitig frei bewegbaren Wagens auf Stellflächen verfahrbar ist.

Die Erfindung ist anhand von Ausführungsbeispielen in der Zeichnung verdeutlicht. Es bedeuten:
- Fig. 1: eine Vorrichtung perspektivisch,
- Fig. 2: eine Vorrichtung offen, in Draufsicht,
- Fig. 3: eine Vorrichtung abgewandelter Ausführung in Seitenansicht,
- Fig. 4: ein Teilstück eines Aufnahmegehäuseunterteils,
- Fig. 5: eine Vorrichtung gemäß einer anderen Ausführung, im Schnitt,
- Fig. 6: ein Teilstück eines Stützstabs in Seitenansicht,
- fig. 7: ein weiteres Teilstück eines Stützstabs mit einer Halteklammer in Seitenansicht,
- Fig. 8: ein Bildwandabschnitt in Vorderansicht mit seitlichen Verlängerungen,
- Fig. 9: Teilstücke einer Vorrichtung gemäß einer Ausführungsform in Draufsicht,
- Fig. 10: eine Kombination von Zwei Vorrichtungen in Vorderansicht und
- Fig. 11: eine Vorrichtung gemäß einer anderen Ausführungsform in Vorderansicht.

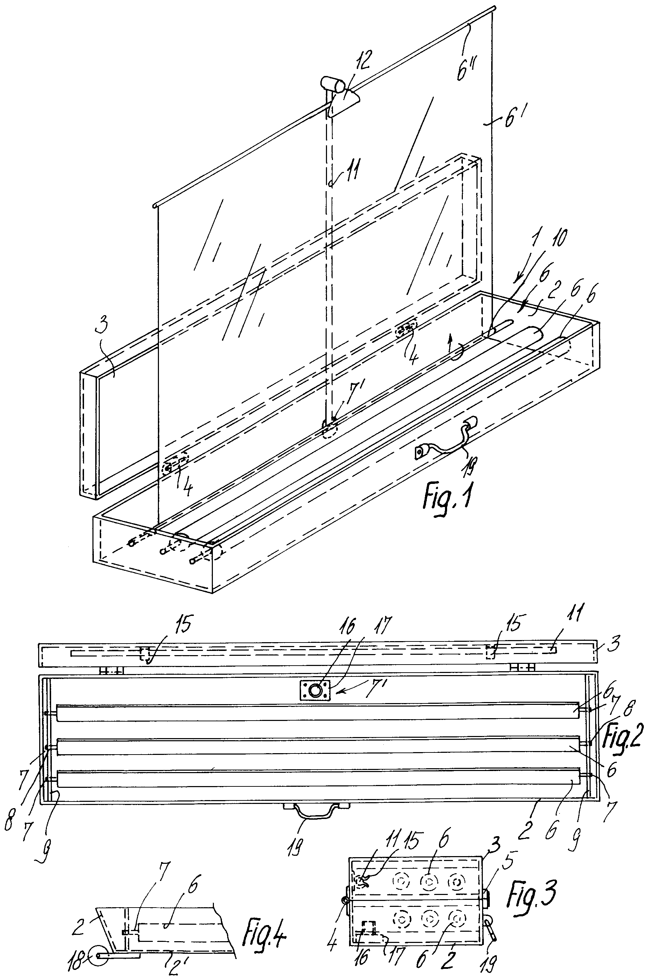

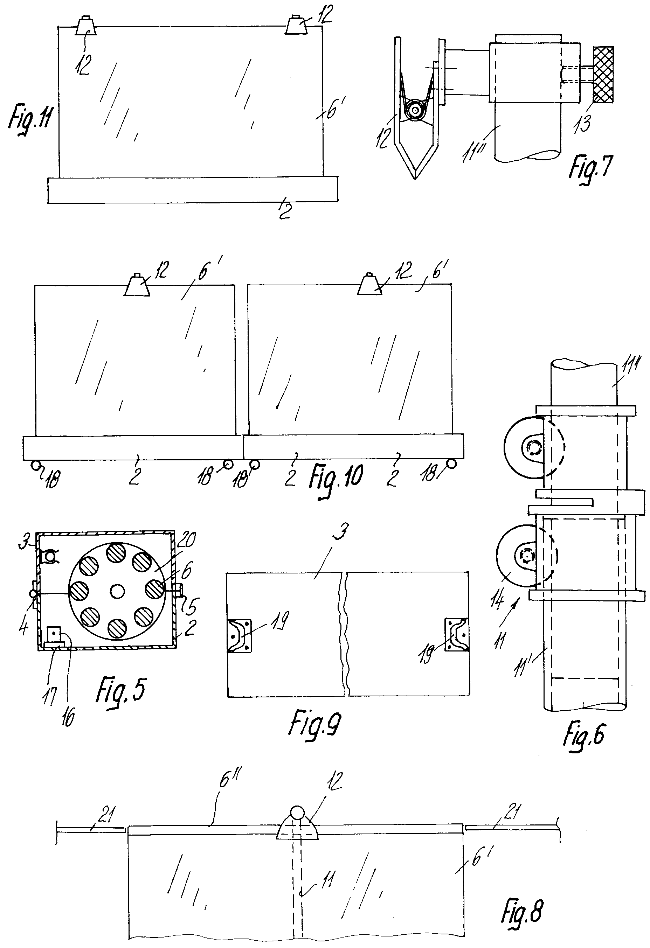

In den Fig. ist mit 1 ein Aufnahmegehäuse bezeichnet, das aus einem Gehäuseunterteil 2 und einem als Deckel dienenden Gehäuseoberteil 3 gebildet ist. Der Gehäuseunterteil 2 und der Gehäuseoberteil 3 sind durch Scharniergelenke 4 abschwenkbar miteinander verbunden. Außerdem sind der Gehäuseoberteil 3 und der Gehäuseunterteil 2 durch Verschlußglieder 5 verschließbar aneinander haltbar. Der Gehäuseunterteil 2 nimmt eine Anzahl, beim Ausführungsbeispiel der Fig. 1 und 2 drei Bildwandwickel 6 auf, die vermittels Achsstummel 7 in Lagern 8 von im Aufnahmegehäuse 1 angeordneten Schienen 9 geführt sind, während der Gehäuseoberteil 3 einen Stützstab 11 trägt. Die Bildwandwickel 6 sind um Walzenkörper 10 herumgelegt und von diesen entgegen der Wirkung einer Rückstellkraft, z.B. einer Rückstellfeder in der Art von Springrollos (nicht gezeigt), abziehbar. Der abgezogene Teil 6' des Bandwickels 6 ist mit seinem freien Ende einer Stützleiste 6'' befestigt und vermittels dieser an dem im Gehäuseunterteil 2 bei 7' fixierbaren Stützstab 11 anhängbar. Der Stützstab 11 ist zum Anhängen des Teils 6' mit einer Klammer 12 versehen (Fig.7), die mit dem Stützstab verstellbar und durch eine Klemmschraube 13 feststellbar verbunden ist. Der Stützstab 11 ist beim Ausführungsbeispiel durch zwei teleskopförmig ineinander gesteckte Rohrabschnitte 11',11'' gebildet, die nach Lösen einer Klemmverbindung 14 teleskopartig ausziehbar sind und in vorgegebener Höhe feststellbar sind. Der Stützstab kann zur Aufbewahrung durch Klammern 15, wie in Fig. 2 gezeigt, im Deckelteil 3 festgelegt sein. Die Abstützung des Stützstabes 11 am Gehäuseunterteil 2 erfolgt mittels einer Hülse 16, die durch eine Platte 17 mit dem Gehäuseunterteil 2 verschraubt ist (Fig.2 u. 3).

Bei der Ausführungsform der Fig. 5 sind im Aufnahmegehäuse 1 zwei kreisrunde Lagerscheiben 20 für eine Anzahl Bandwickel 6 drehbar gelagert. Die Lagerscheiben 20 erlauben eine trommelförmige Stützung der Bandwickel 6, die durch Drehung der Lagerscheiben 20 nacheinander in eine Abzugsposition der Bandwickelteile 6' bringbar sind. Die trommenförmige Halterung der Bandwickel 6 ermöglicht die Bandwickel 6 mit geringem Platzaufwand im Aufnahmegehäuse zu halten.

Zur erleichterten Handhabung der Vorrichtung kann der Gehäuseunterteil 2 im Bereich des Bodens 2' außen Rollen 18 aufweisen, die einen verfahrbaren Transport der Vorrichtung erlauben. Während beim Ausführungsbeispiel der Fig. 4 an einem Ende des Aufnahmegehäuses 1 ein Rollenpaar 18 vorgesehen ist, sind beim Ausführungsbeispiel der Fig. 10 zwei Rollenpaare 18 in Anwendung gebracht. Es versteht sich, daß der Gehäuseoberteil 3 und der Gehäuseunterteil 2 aus einem hölzernen Werkstoff, einem Kunststoff bzw. einem metallischen Werkstoff, z.B. Aluminium, gefertigt sein können. Bei der Verwendung von Holz und Kunststoff sind die Randkanten der Gehäuseteile 2,3 zweckmäßig durch Leisten einzufassen.

Bevorzugt sind im Bereich einer Längsseite des Gehäuseunterteils 2 ein Handgriff 19 vorgesehen. Es besteht die Möglichkeit, wie in Fig. 9 erkennbar, im Gehäuseoberteil 3 oberseitig zwei Handgriffe 19 an einander gegenüberliegenden Stirnseiten anzuordnen, so daß die Vorrichtung durch zwei Personen tragbar ist. Anstelle der gezeigten starren Handgriffe 19 können auch Schlaufen (nicht gezeigt) aus einem flexiblen Werkstoff in Anwendung gebracht werden.

Bei der Vorrichtung gemäß Fig. 3 sind abweichend im Gehäuseunterteil 2 und im Gehäuseoberteil 3 jeweils drei Bildwandwickel drehbeweglich abziehbar gelagert. Außerdem nimmt der Gehäuseunterteil 2 die Abstützung 16,17 für den Stützstab 11 auf und der Stützstab 11 ist im Gehäuseoberteil 3 durch Klammern 15 gehalten. Durch Aufklappen der Gehäuseunter- und Gehäuseoberteile sind die Bildwandwickel 6 zugänglich und können nacheinander abgezogen und der jeweils abgezogene Teil 6' nach Aufrichten des Stützstabes 11 an diesen angehängt werden. In Fig. 11 kommen in weiterer Abweichung für den abgezogenen Teil 6' zwei Klammern 12 zur Anwendung, die an je einem Stützstab 11 angeordnet sind. Mit Fig. 21 sind in Fig. 8 Verlängerungen 21 für die Stützleiste 6'' gezeigt.

## Patentansprüche

1. Vorrichtung zum Halten flexibler Bildwände, insbesondere Hintergrundwände für fotografisch oder elektronisch erzeugbare Bilder, bei der die Bildwände mit einem Ende durch einen Stützstab gehalten sind, gekennzeichnet durch die Anordnung eines mobilen aufstellbaren kastenförmigen Gehäuses (1), das eine Anzahl Bildwandwickel (6) neben- und/oder übereinander gemeinsam mit einem Stützstab (11) aufnimmt, daß die Bildwände (6') einzeln unabhängig von den Bildwandwickeln (6) entgegen der Wirkung einer Rückstellkraft abziehbar sind und daß die Bildwände (6') mit den freien Enden mittel- oder unmittelbar am aufrecht am Aufnahmegehäuse (1) fixierten Stützstab (11) festlegbar sind.

2. Vorrichtung nach Anspruch 1, dadurch gekennzeichnet, daß das Aufnahmegehäuse (1) durch einen kastenförmigen Unterteil (2) und einen als Deckel dienenden kastenförmigen Oberteil (3) gebildet ist, daß der Unterteil (2) und der Oberteil (3) vermittels Scharniergelenken (4) schwenkbar und verschließbar miteinander verbunden sind und daß der Ober- (3) und/oder Unterteil (2) einzeln oder gemeinsam eine Anzahl Bildwandwickel (6) sowie mindestens einen Stützstab (11) aufnehmen.

3. Vorrichtung nach Anspruch 2, dadurch gekennzeichnet, daß der Ober- (3) und Unterteil (2) des Aufnahmegehäuses (1) im Bereich von Längsseiten miteinander gelenkig verbunden sind.

4. Vorrichtung nach Anspruch 2, dadurch gekennzeichnet, daß der Ober- (3) und Unterteil (2) des Aufnahmegehäuses im Bereich von Stirnseiten miteinander gelenkig verbunden sind.

5. Vorrichtung nach Anspruch 1, dadurch gekennzeichnet, daß die freien Enden der Bildwandwickel (6) Stützleisten (6'') od.dgl. aufweisen und vermittels der Stützleisten (6'') am Stützstab (11) festlegbar sind.

6. Vorrichtung nach Anspruch 5, dadurch gekennzeichnet, daß die Stützleisten (6'') oder das freie Bildwandende durch eine stützstabfeste Klammer (12) lösbar fest am Stützstab (11) haltbar ist.

7. Vorrichtung nach Anspruch 5, dadurch gekennzeichnet, daß die Stützleisten (6'') aus einem metallischen Werkstoff oder einem Kunststoff gebildet sind.

8. Vorrichtung nach Anspruch 5,6 und 7, dadurch gekennzeichnet, daß die Bildwandwickel (6) an den freien Enden Stützleisten (6'') aufweisen und daß die Stützleisten (6'') an mindestens einem stirnseitigen Ende verlängerbar sind.

9. Vorrichtung nach Anspruch 1, dadurch gekennzeichnet, daß der Stützstab (11) durch miteinander lösbar fest bzw. fest verbundene Stützstababschnitte (11',11'') gebildet ist.

10. Vorrichtung nach Anspruch 1,7 und 8, dadurch gekennzeichnet, daß der Stützstab (11) durch Stützstababschnitte (11',11'') gebildet ist, die einander über Teillängen umfassen und teleskopartig ausziehbar sind.

11. Vorrichtung nach Anspruch 1, dadurch gekennzeichnet, daß die Bildwandwickel (6) um Walzenkörper herumgelegt sind und daß die Walzenkörper (10) mit ihren stirnseitigen Enden in im Aufnahmegehäuse ausgebildeten Lagern (8) drehbar gehalten sind.

12. Vorrichtung nach Anspruch 11, dadurch gekennzeichnet, daß die Lager (8) für die Walzenkörper (10) in aufnahmegehäusefesten Schienen (9) od.dgl. ausgebildet sind, die schlitzförmige bzw. kreisförmige Lageröffnungen für die Aufnahme von an den Walzenkörpern (10) angeordneten Achsstummeln (7) aufweisen.

13. Vorrichtung nach Anspruch 11, dadurch gekennzeichnet, daß die Lager (8) für die Bildwandwickel (6) durch im Aufnahmegehäuse (1) drehbar geführten Lagerscheiben (20) gebildet sind und daß die Lagerscheiben (20) eine Anzahl Bildwandwickel (6) trommelförmig stützen.

14. Vorrichtung nach Anspruch 1 und 2, dadurch gekennzeichnet, daß das Aufnahmegehäuse (1) mindestens einen starren Tragegriff (19) aufweist.

15. Vorrichtung nach Anspruch 1 und 13, dadurch gekennzeichnet, daß das Aufnahmegehäuse auf einer Außenfläche, insbesondere im Bodenbereich (2') mindestens ein Rollenpaar (18) aufweist.

16. Vorrichtung nach Anspruch 15, dadurch gekennzeichnet, daß das Rollenpaar (18) feststellbar ausgebildet ist.

17. Vorrichtung nach Anspruch 15, dadurch gekennzeichnet, daß das Aufnahmegehäuse (1) auf einer Außenfläche ein Rollenpaar (18) und mindestens eine Lenkrolle aufweist.

18. Vorrichtung nach Anspruch 3, dadurch gekennzeichnet, daß das Aufnahmegehäuse (1) an einander gegenüberliegenden Seitenflächen bzw. quer zu diesen sich erstreckenden Seitenflächen außen starre Tragegriffe (19) oder flexible Trageschlaufen aufweist.
